# EUROPEAN PATENT SPECIFICATION

(11) **EP 4 324 803 B1**
(45) Date of publication and mention of the grant of the patent: **03.07.2024**
(21) Application number: 22190794.2
(22) Date of filing: 17.08.2022
(51) Int. Cl.: C04B 18/14

(54) **A MECHANOCHEMICALLY CARBONATED SLAG, METHODS OF ITS PRODUCTION AND USES THEREOF**
MECHANOCHEMISCH KARBONISIERTE SCHLACKE, VERFAHREN ZU IHRER HERSTELLUNG UND VERWENDUNGEN DAVON
LAITIER CARBONATÉ PAR VOIE MÉCANO-CHIMIQUE, SES PROCÉDÉS DE PRODUCTION ET UTILISATIONS

(43) Date of publication of application: 21.02.2024
(73) Proprietor: Carbon Upcycling Technologies Inc., Calgary, AB T3S 0A2 (CA)
(72) Inventor: SINHA, Apoorva, Calgary, T3S 0A2 (CA)
(74) Representative: Nederlandsch Octrooibureau

(56) References cited:
- CN-A- 114 163 158
- CN-B- 112 791 573
- SATOSHI ASAOKA ET AL: "Removal of hydrogen sulfide using carbonated steel slag", CHEMICAL ENGENEERING JOURNAL, vol. 228, 24 March 2013 (2013-03-24), pages 843-849, XP055550647, AMSTERDAM, NL ISSN: 1385-8947, DOI: 10.1016/j.cej.2013.05.065

## Description

### Field of the invention

The present invention relates to a mechanochemically carbonated slag. The invention further relates to methods of its production and uses thereof. The invention further relates to compositions comprising the mechanochemically carbonated slag and a further material selected from the group consisting of asphalt, cement, geopolymer, polymers and combinations thereof. The invention further relates to concrete and methods of their preparation.

### Background art

Concrete is a composite material, comprising a matrix of aggregate (typically a rocky material) and a binder (typically Portland cement or asphalt), which holds the matrix together. Concrete is one of the most frequently used building materials and is said to be the second most widely used material on earth, after water.

In order to reduce the cost of concrete and the CO₂ emissions generated by global cement production, much research effort has been dedicated to identifying cheap material which can be used as a filler or alternative binder to replace the binder component without (detrimentally) affecting the properties of concrete. Such secondary cementitious materials are an area of broad industry interest.

An example of a widely employed cement filler is limestone. A comprehensive overview of fillers in cementitious materials can be found in John, Vanderley M., et al. "Fillers in cementitious materials-Experience, recent advances and future potential." Cement and Concrete Research 114 (2018): 65-78.

The production of Portland cement contributes to about 8% of world carbon dioxide emissions. According to Vanderley et al. the traditional mitigation strategies for CO₂ emissions in the cement industry are not sufficient to ensure the necessary mitigation in a scenario of increasing cement demand. Currently, cement production is increasing due to a combination of increasing urbanization and replacement of old infrastructure. Therefore, the adoption of expensive and environmentally risky carbon capture and storage (CCS) has been considered an unavoidable solution by cement industry leaders.

Hence, there remains a need to develop affordable filler technology which can combine both the CO₂ emission reduction achieved by reduced cement production and the CO₂ emission reduction achieved by carbon capture technology and which does not detrimentally affect the properties of concrete.

US 8,709,151 B2 describes a method of producing an article by compacting a granular ground blast furnace slag, which is then submitted to an autoclave for carbonation under conditions such that water is in liquid form. Since US 8,709,151 B2 relies on an autoclave reactor for carbonation where high temperatures and pressures up to 14 MPa are used, it is not very energy efficient. Furthermore, since multiple unit operations (incl. compacting and carbonation) all take place as separate steps, the practical implementation and in particular automation is not straightforward.

Satoshi Asaoka et al. 'Removal of hydrogen sulfide using carbonated steel slag' Chemical Engineering Journal, 22, 2013, 843-849 discloses a passively carbonated slag which has a particle size of 0.8-5 mm. In Satoshi Asaoka et el. carbonation is performed by piling up steel slag in a field for 2 months so that the material's surface naturally carbonates.

CN114163158A concerns a composite powder comprising a carbonated slag.

CN112791573B concerns the use of a metallurgical waste slag and wastewater generated in the steelmaking process to capture CO₂ from metallurgical waste gas in the slag.

It is an object of the present invention to provide improved fillers for geopolymer, cement or asphalt binder.

It is a further object of the present invention to provide improved fillers for geopolymer, cement or asphalt binder which are cheap to produce.

It is a further object of the present invention to provide improved fillers for geopolymer cement or asphalt binder which are produced using CO₂ capture technology.

It is a further object of the present invention to provide improved fillers for geopolymer, cement or asphalt binder which improve the properties of the resulting concrete, such as the compressive strength, the strength activity index and/or the water demand.

### Summary of the invention

The invention is set out in the appended set of claims..

In an aspect, the invention provides a method for producing a mechanochemically carbonated slag, said method comprising the steps of:
a) providing a feedstock comprising or consisting of a slag precursor;
b) providing a gas comprising at least 0.5 vol% CO₂;
c) introducing said feedstock and said gas into a mechanical agitation unit; and
d) subjecting the material of said feedstock to a mechanical agitation operation in the presence of said gas in said mechanical agitation unit,
wherein step (d) is not performed on an aqueous solution or slurry.

This method can be applied to various types of slag precursors, advantageously resulting in unique mechanochemically carbonated slag.

In another aspect, the invention provides a mechanochemically carbonated slag obtainable by the method for producing the mechanochemically carbonated slag described herein which has a specific surface area within the range of 0.1-50 m²/g and which has a D50 within the range of 0.1-50 µm.

As will be shown in the appended examples, it was found that when such mechanochemically carbonated slags described herein are used as a filler in cement the compressive strength of the resulting concrete is surprisingly increased beyond the values obtained for non-carbonated slags. In particular, the set time for the strength development is strongly improved (shortened) compared to when non-mechanochemically carbonated slag is used as a filler. Furthermore, a much higher amount of this mechanochemically carbonated slag can be used as a filler while still resulting in acceptable or even improved concrete properties.

It was furthermore found that the durability of the concrete produced using said mechanochemically carbonated slag is considerably increased. Without wishing to be bound by any theory, the present inventors believe that this is due to enhanced micro and sub-microscale hydration, a reduced chloride permeability, reduced porosity of the concrete the concrete and/or passivation of free lime. Moreover, the increased oxygen content as compared to untreated precursors or feedstock may result in better dispersion in polar solvents, and better compatibility with materials that have epoxy or carboxyl functional groups.

Furthermore, as is shown in the appended examples, the water demand is decreased compared to pure cement, as well as compared to cement filled with non-carbonated slag. This is particularly surprising in view of the reduced particle size of the mechanochemically carbonated slag compared to the non-carbonated slag. A reduced particle size is generally associated with an increased water demand. The reduced water demand as compared to untreated feedstocks or pure cement may contribute to improved properties such as workability, compressive strength, permeability, watertightness, durability, weathering resistance, drying shrinkage and potential for cracking. For these reasons, limiting and controlling the amount of water in concrete is important for both constructability and service life. Thus, the present invention allows to have better control over the water demand. The present inventors have found that the mechanochemical carbonation of the present invention effects an increase in the overall amorphous content of the slag precursor. Without wishing to be bound by any theory, it is believed that the mechanochemical process of the invention may result in an increase in amorphous content when analyzed by XRD wherein at least some crystalline domains which may be present in a feedstock are maintained via an internal architecture in the form of microcrystallinity, which persists in a more generalized disordered structure. This disordered macro structure, thus, promotes higher reactivity and improves cement hydration.

Additionally, the production of the mechanochemically carbonated slag relies on a cheap CO₂ capture technology platform capable of operating on dilute CO₂ streams, such as directly on a point source emissions of a combustion plant, such that a filler is provided which can be produced in an economically viable manner and which combines both the CO₂ emission reduction achieved by reduced cement production and the CO₂ emission reduction achieved by CO₂ sequestration. Thus, the mechanochemically carbonated slag of the present invention, in particular the mechanochemically carbonated slag of the invention, constitutes an excellent filler for many applications, combining distinct mechanical properties with a cost-efficient CO₂ capture technology.

In another aspect, the invention provides a composition comprising a mechanochemically carbonated slag as described herein and a further material selected from the group consisting of asphalt, cement, geopolymers, polymers and combinations thereof.

In another aspect, the invention provides a method for preparing a composition as described herein, said method comprising the following steps:
(i) providing a mechanochemically carbonated slag as described herein;
(ii) providing a further material selected from the group consisting of asphalt, cement, polymers, geopolymers, and combinations thereof; and
(iii) combining the mechanochemically carbonated slag of step (i) with the material of step (ii).

In another aspect, the invention provides a method for preparing concrete or mortar, said method comprising the following steps:
(i) providing a mechanochemically carbonated slag as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate; and
(iii) contacting, preferably mixing the mechanochemically carbonated slag and the further material of step (i) with the construction aggregate of step (ii) and optionally water.

In another aspect, the invention provides concrete obtainable by a method for preparing concrete described herein.

In another aspect the invention provides the use of a mechanochemically carbonated slag as described herein:
- as a filler, preferably as a filler in a material selected from the group consisting of asphalt, geopolymer, cement, mortar, polymers and combinations thereof;
- as a partial replacement for asphalt, geopolymer or cement in concrete or mortar;
- to increase the compressive strength of concrete or mortar;
- to improve the durability of concrete or mortar;
- to improve the durability of concrete or mortar by reducing chloride permeability and/or porosity;
- to improve the strength activity index of concrete or mortar; and/or
- to reduce the water demand of concrete or mortar,
   preferably,
- to concomitantly improve the strength activity index of concrete and reduce the water demand of concrete; or
- to concomitantly improve the strength activity index of mortar and reduce the water demand of mortar.

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound.

The terms "slag precursor" and "slag" as used herein should be construed to include any welding or furnace slag, in particular furnace slag from metal production or processing. In preferred embodiments of the present invention, the slag precursor is a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag. The slag precursor is preferably a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag from ferrous metal production, non-ferrous metal production, or phosphorus production. The slag precursor is more preferably a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag from iron or steel production. The slag precursor is most preferably a granulated blast furnace slag which has optionally been ground, from iron or steel production.

The term "mechanochemically carbonated slag" is used herein to refer to a slag obtainable by the mechanochemical carbonation method of the present invention.

In accordance with the invention, the BET surface area as referred to herein is determined at a temperature of 77K using a sample mass of 0.1-0.5g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini VII 2390 Surface Analyzer preferably equipped with a Micromeritics FlowPrep 060 flowing-gas degassing unit.

TGA as used herein refers to Thermogravimetric Analysis, a technique known to the person skilled in the art. A preferred TGA setup to determine the CO₂ content of the feedstocks and carbonated materials in the context of the present invention is a Setaram TAG 16 TGA/DSC dual chamber balance employing a 0.1-2 mg sample. In accordance with the invention, the TGA is performed under an inert atmosphere, such as nitrogen or argon.

In accordance with the invention, the particle size distribution characteristics referred to herein such as D10, D50 and D90 as well as the specific surface area (unless explicitly mentioned to be BET surface area) are determined by measuring with a laser light scattering particle size analyzer utilizing the Fraunhofer theory of light scattering, such as the Brookhaven laser particle sizer, Model Microbrook 2000LD or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles.

In accordance with the invention, the compressive strength, strength-activity index and water demand as referred to herein is determined in accordance with ASTM C311/C311M-22. As will be evident to the skilled person, in performing these tests, the slag precursor or the carbonated slag of the present invention was used instead of the "fly ash or natural pozzolan" specified by the standard.

In accordance with the invention, the X-Ray Diffraction (XRD) determinations referenced herein are carried out using a corundum standard.

For the purposes of the present disclosure, ideal gas law is assumed such that the vol% of a gas is considered as equal to the mol%.

### Mechanochemically carbonated slag

Hence, in a first aspect the invention provides a mechanochemically carbonated slag obtainable by the method of the present invention which has a specific surface area within the range of 0.1-50 m²/g, preferably 0.5-50 m²/g, and which has a D50 within the range of 0.1-50 µm.

The mechanochemically carbonated slag preferably has an amorphous content as determined by XRD of at least 50 wt.%, preferably at least 60 wt.%, more preferably at least 65 wt.%. As is shown in the appended examples, the present inventors have found that the mechanochemical carbonation methods herein enable obtaining such a high amorphous content slag. This is particularly preferred when the slag is obtained from a slag precursor which is a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag, said precursor having an amorphous content as determined by XRD of less than 45 wt.%, preferably less than 40 wt.%. It is furthermore preferred that the Larnite content as determined by XRD of the mechanochemically carbonated slag is less than 20 wt.%, preferably less than 14 wt.%, more preferably less than 10 wt.%.

In preferred embodiments of the invention, the mechanochemically carbonated slag meets the strength requirements set out in ASTM C618-12a (2012) and CSA A3001-18 (2018).

In embodiments of the invention, the mechanochemically carbonated slag has a specific surface area of at least 0.5 m²/g.

In preferred embodiments of the invention, the mechanochemically carbonated slag has a specific surface area of less than 30 m²/g, more preferably less than 10 m²/g. For example, the specific surface has a specific surface area of less than 50 m²/g, less than 48 m²/g, less than 46 m²/g, less than 44 m²/g, less than 42 m²/g, less than 40 m²/g, less than 38 m²/g, less than 36 m²/g, less than 34 m²/g, less than 32 m²/g, less than 30 m²/g, less than 28 m²/g, less than 26 m²/g, less than 24 m²/g, less than 22 m²/g, less than 20 m²/g, less than 18 m²/g, less than 16 m²/g, less than 14 m²/g, less than 12 m²/g, less than 10 m²/g, less than 8 m²/g, less than 6 m²/g, etc.

In highly preferred embodiments, the mechanochemically carbonated slag has a specific surface area of less than 5 m²/g, preferably less than 3 m²/g, more preferably less than 2 m²/g. For example, the mechanochemically carbonated slag may have a specific surface area of less than 5.0 m²/g, less than 4.5 m²/g, less than 4.0 m²/g, less than 3.5 m²/g, less than 3.0 m²/g, less than 2.5 m²/g, less than 2.0 m²/g, less than 1.5 m²/g, etc.

The inventors have observed that a mechanochemically carbonated slag having specific surface area within the ranges specified herein have particular properties when considering performance, handling, etc. in comparison to untreated precursors or even carbonated materials with other surface areas. Hence, in accordance with highly preferred embodiments of the invention, the mechanochemically carbonated slag has specific surface area of 0.5-50 m²/g, such as a specific surface area in the region 0.1-50 m²/g, preferably 0.1-30 m²/g, more preferably 0.1-10 m²/g; a specific surface area in the region 0.1-5.0 m²/g, preferably 0.1-3.0 m²/g, more preferably 0.1-2.0 m²/g; a specific surface area in the region 0.5-50 m²/g, preferably 0.5-30 m²/g, more preferably 0.5-10 m²/g; a specific surface area in the region 0.5-5.0 m²/g, preferably 0.5-3.0 m²/g, more preferably 0.5-2.0 m²/g, etc.

In embodiments of the invention, the mechanochemically carbonated slag has one, two, or three, preferably three, of the following characteristics:
- a D10 within the range of 0.005-10 µm, preferably 0.01-5 µm, most preferably 0.1-5 µm;
- a D50 within the range of 0.5-35 µm, most preferably 1-15 µm;
- a D90 within the range of 0.5-100 µm, preferably 1-60 µm, most preferably 1-50 µm.

The carbonated slag preferably has a CO₂ content of at least 1 wt.%, more preferably at least 1.5 wt.%, most preferably at least 2.2 wt.%, wherein the CO₂ content is determined as the mass loss above 450°C measured by TGA employing a temperature trajectory wherein the temperature was increased from room temperature to 800°C at a rate of 10 °C/min.

Without wishing to be bound by any theory, the present inventors believe that the specific surface area increase effected by the dry mechanochemical carbonation method of the invention is associated with the beneficial properties observed (such as the excellent strength activity index, and reduced water demand). Hence, in embodiments of the invention, the mechanochemically carbonated slag is provided which is obtainable by concomitant carbonation and specific surface area increase of a slag precursor wherein the ratio of the specific surface area of the mechanochemically carbonated slag to the specific surface area of the slag precursor is at least 1.2:1, preferably at least 1.4:1, more preferably at least 1.6:1. The inventors have observed that said ratio of the specific surface area being at least 1.8 provided even better results.

Without wishing to be bound by any theory, the present inventors believe that the BET surface area increase effected by the dry mechanochemical carbonation method of the invention is associated with the beneficial properties observed (such as the excellent strength activity index, and reduced water demand). Hence, in embodiments of the invention, the mechanochemically carbonated slag is provided which is obtainable by concomitant carbonation and BET surface area increase of a slag precursor wherein the ratio of the specific surface area of the mechanochemically carbonated slag to the BET surface area of the slag precursor is at least 2:1, preferably at least 3:1, more preferably at least 3.5:1.

Without wishing to be bound by any theory, the present inventors believe that the amorphous content increase effected by the dry mechanochemical carbonation method of the invention is associated with the beneficial properties observed (such as the excellent strength activity index, and reduced water demand). Hence, in embodiments of the invention, the mechanochemically carbonated slag is provided which is obtainable by concomitant carbonation and amorphous content increase of a slag precursor wherein the absolute difference between the amorphous content (expressed as % based on total weight) of the mechanochemically carbonated slag is and the amorphous content (expressed as % based on total weight) of the slag precursor is at least 20 percentage points, preferably at least 30 percentage points, more preferably at least 35 percentage points. The amorphous content is determined by XRD.

Without wishing to be bound by any theory, the present inventors believe that the BET surface area increase effected by the dry mechanochemical carbonation method of another aspect of the invention (which is described herein elsewhere) may largely be attributed to an increase in the number of pores, observed by a decrease in the average pore width and an increase in the total pore surface area. Hence, in embodiments of the invention, the mechanochemically carbonated slag is provided which is obtainable by concomitant carbonation and BET surface area increase of a slag precursor wherein the BJH desorption cumulative surface area of pores of the mechanochemically carbonated slag is at least 110%, preferably at least 120%, more preferably at least 150%, of the BJH desorption cumulative surface area of pores of the slag precursor and the desorption average pore width (4V/A by BET) of the mechanochemically carbonated slag is no more than 90%, preferably no more than 85%, more preferably no more than 80%, of the desorption average pore width (4V/A by BET) of the slag precursor.

In embodiments of the invention, the mechanochemically carbonated slag has a strength activity index (SAI) at day 7 which is at least 75%, preferably at least 80%. The inventors have observed that the mechanochemical process of the present invention allows obtaining carbonated slag having excellent day 7 SAI. Hence, in highly preferred embodiments the mechanochemically carbonated slag has a SAI at day 7 which is at least 85%, preferably at least 90%, more preferably at least 95%.

In embodiments of the invention, the mechanochemically carbonated slag has a strength activity index (SAI) at day 28 which is at least 85%, preferably at least 90%. The inventors have observed that the mechanochemical process of the present invention allows obtaining carbonated slag having excellent day 28 SAI. Hence, in highly preferred embodiments the mechanochemically carbonated slag has a SAI at day 28 which is at least 100%.

In embodiments of the invention, the mechanochemically carbonated slag has a water demand which is less than 97%, preferably less than 96%, more preferably less than 95%. The inventors have observed that the mechanochemical process of the present invention allows obtaining carbonated slag having an extremely low water demand. Hence, in highly preferred embodiments the mechanochemically carbonated slag has a water demand which is less than 94%, preferably less than 93%.

In embodiments, the mechanochemically carbonated slag comprises a mixture of silicon dioxide (SiO₂) and other metal oxides. The mechanochemically carbonated slag typically contains other metal sulfides and elemental metals. In preferred embodiments, the mechanochemically carbonated slag is obtainable by carbonation of a slag from iron or steel production.

In embodiments of the invention, the mechanochemically carbonated slag comprises:
- 10-40 wt. % SiO₂ (by total weight of the mechanochemically carbonated slag);
- less than 90 wt.% (by total weight of the mechanochemically carbonated slag) of metal oxides other than SiO₂, preferably less than 80 wt.% (by total weight of the mechanochemically carbonated slag), more preferably less than 70 wt.% (by total weight of the mechanochemically carbonated slag), even more preferably less than 60 wt.% (by total weight of the mechanochemically carbonated slag).

In further embodiments of the invention, the mixture of metal oxides other than SiO₂ has one, two, three or all four, preferably all four, of the following characteristics:
- a total content of calcium oxides and hydroxides within the range of 30-60 wt. % (by total weight of the mechanochemically carbonated slag);
- a total content of iron oxides and hydroxides within the range of 1-30 wt.% (by total weight of the mechanochemically carbonated slag);
- a total content of magnesium oxides and hydroxides within the range of 1-10 wt.% (by total weight of the mechanochemically carbonated slag);
- a total content of aluminum oxides and hydroxides within the range of 10-30 wt. % (by total weight of the mechanochemically carbonated slag).

In preferred embodiments, the mechanochemically carbonated slag comprises calcium oxides and hydroxides, magnesium oxides and hydroxides, SiO₂, and aluminium oxides and hydroxides in contents such that the sum of the total content of calcium oxides and hydroxides, magnesium oxides and hydroxides, and SiO₂ represents at least two thirds by weight (66.7% by weight) of the weight of the mechanochemically carbonated slag and the ratio by weight of the sum of the total contents of calcium oxides and hydroxides and magnesium oxides and hydroxides to the content of silicon dioxide (e.g., of calcium oxide and magnesium oxide ratio to silicon dioxide is denoted as (CaO+MgO)/SiO₂) is greater than 1.0.

### Method for the production of mechanochemically carbonated slag and mechanochemically carbonated slag obtainable thereby

Without wishing to be bound by any theory, the present inventors believe that the dry mechanochemical carbonation method of the present invention imparts unique and desirable properties to the carbonated slag obtainable by this method. For example, it is believed that the unique surface area and pore properties effected by the dry mechanochemical carbonation method of the present invention is important to achieve the surprising performance of the materials in e.g. concrete.

In a further aspect, the invention provides a method for producing a mechanochemically carbonated slag, said method comprising the following steps:
a) providing a feedstock comprising or consisting of a slag precursor;
b) providing a gas comprising at least 0.5 vol% CO₂;
c) introducing said solid feedstock and said gas into a mechanical agitation unit; and
d) subjecting the material of said solid feedstock to a mechanical agitation operation in the presence of said gas in said mechanical agitation unit to obtain the mechanochemically carbonated slag,
wherein step (d) is not performed on an aqueous solution or slurry.

### Process description

The term "feedstock" is to be interpreted as a material consisting of or comprising a slag precursor. The slag precursor may be mixed with other materials (e.g. fly ash) to form the feedstock. The term "precursor" is used to designate the slag before it is submitted to the mechanochemical carbonation of the invention. However, preferably, the feedstock consists essentially of a slag precursor as this allows optimisation of process conditions to achieve the desired carbonated slag properties without having to take into account the properties of other materials present in the feedstock.

It is within the capacity of one skilled in the art, in light of the guidance provided in the present disclosure, to adapt the relevant process parameters such that a mechanochemically carbonated slag is obtained which has the properties recited herein.

The gas provided in step (b) may be any gas stream comprising CO₂, such as regular air, a waste gas stream having a low CO₂ concentration, or concentrated CO₂ streams, with the proviso that the gas comprises at least 0.5 vol% CO₂.

In embodiments of the method described herein the gas provided in step (b) is regular air.

In highly preferred embodiments of the method described herein the gas provided in step (b) is a combustion flue gas, in particular a flue gas from fossil fuel combustion, wood pellet combustion, biomass combustion or municipal waste combustion. Fossil fuel combustion may be coal, petroleum, petroleum coke, natural gas, shale oil, bitumens, tar sand oil, or heavy oils combustion, or any combination thereof. The combustion flue gas may optionally have been treated to reduce the water content, the SO₂ content, and/or the NOx content.

The CO₂ concentration in the gas provided in step (b) is at least 0.5 vol%. Typical CO₂ concentrations for combustion flue gas are in the range of 1-15 vol%, such as 2-5 vol%, such that it is preferred that the gas provided in step (b) has a CO₂ concentration in the range of 1-10 vol%, such as 2-5 vol%. In alternative embodiments of the invention, the gas provided in step (b) comprises at least 80 vol% CO₂, preferably at least 95 vol% CO₂. In some embodiments of the invention, the gas provided in step (b) comprises at least 80 vol% CO₂, preferably at least 95 vol% CO₂ and less than 1000 ppm (v/v) H₂O, preferably less than 100 ppm (v/v) H₂O. In some embodiments, the gas provided in step (b) comprises CO₂ in at least 0.1 vol% and H₂O in the range of 5-25 vol%. For example, in case of flue gas, the gas provided in step (b) preferably comprises CO₂ in the range of 1-15 vol%, such as 2-10 vol% and H₂O in the range of 5-25 vol%, such as 15-20 vol%. The gas is typically not in a supercritical state as this is not necessary for the mild mechanochemical carbonation process of the present invention. Hence in any embodiment of the invention, it is highly preferred that the gas is not in a supercritical state.

In some embodiments of the invention, the method described herein is provided with the proviso that the temperature and pressure during step (d) are such that the pressure is lower than the saturated vapour pressure of water at the temperature in the mechanical agitation unit.

The expression "in the presence of said gas" in step (d) should be construed to mean that the atmosphere inside the mechanical agitation unit consists essentially of the gas provided in step (b) when step (d) is initiated. It will be understood by the skilled person that the composition of the gas will change as the reaction progresses unless the reactor (the mechanical agitation unit) is continuously purged or replenished.

In general, step (d) can be performed at atmospheric pressure, below atmospheric pressure or above atmospheric pressure. In general it is preferred that step (d) is performed at or above atmospheric pressure. Hence, it is preferred that step (d) is performed at a pressure of at least about 100 kPa (e.g. at least 101.325 kPa). In preferred embodiments of the invention, step (d) is performed at a pressure of more than around 300 kPa (e.g., 303.975 kPa), preferably more than around 600 kPa (e.g., 607.95 kPa). In alternative embodiments of the invention, step (d) is performed at pressures of less than around 100 kPa (e.g. at least 101.325 kPa), such as less than 50 kPa or less than 10 kPa. It will be understood by the skilled person that (if not actively maintained) the pressure of the gas will change as the reaction progresses. In these embodiments it should be understood that the pressure inside the mechanical agitation unit is as specified herein when step (d) is initiated. In some embodiments the pressure inside the mechanical agitation unit is as specified herein throughout step (d).

In highly preferred embodiments of the method described herein, in order to stimulate carbonation, step (d) is performed at a temperature of less than 150 °C, preferably less than 100 °C, preferably less than 90 °C, more preferably less than 80 °C, most preferably less than 75 °C. In highly preferred embodiments of the invention, step (d) is performed at a temperature within the range of 45-85 °C, preferably 55-70 °C. In preferred embodiments of the invention, no active heating is applied and any increase in temperature is attributed to friction resulting from the mechanical agitation or to exothermic reactions taking place during the mechanochemical carbonation. The temperature is preferably determined on the solid material in the reactor (i.e. the mechanical agitation unit) during processing.

The low temperature requirement of the present process means that no fossil fuels are required, and electric heating means (or low caloric value green fuel sources) can realistically be used to supply heat in case friction caused by the mechanical agitation is insufficient to reach the desired temperature, such as more than 45 °C. In this way, fossil fuels can be avoided throughout the whole production chain.

As with any chemical process, the appropriate reaction time is highly dependent on the extent of carbonation desired, the surface area desired, as well as the pressure, temperature and mechanochemical agitation applied and can easily be determined by sampling material on a regular basis and monitoring reaction progress e.g. via BET analysis, particle size analysis, specific surface area and CO₂ content determination as explained herein.

The present inventors have furthermore found that the mechanochemical carbonation methods described herein may advantageously be performed without employing additional oxidizing agents such as acids. Hence, the mechanochemical carbonation methods described herein are preferably performed without employing a strong acid, preferably without employing any further oxidizing agent other than the gas provided in step (b).

In preferred embodiments of the invention, the mechanical agitation operation of step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication. The present inventors have found that the mechanochemical carbonation process is facilitated if the mechanochemical agitation operation of step (d) the mechanochemical agitation operation of step (d) is performed in the presence of grinding or milling media, preferably balls or beads. A preferred material is stainless steel or aluminium oxide. In such highly preferred embodiments, the mechanical agitation operation may be simply rotating the mechanical agitation unit containing the solid feedstock, the grinding or milling media, and the gas. For example, grinding or milling media can be made from steel (e.g. AISI H13, modified H10), chrome white cast irons (e.g. ASTM A532), molybdenum steel (e.g. AISI M2, M4, M-42), chromium-based steels (e.g. H11, H12, H13 CPM V9, ZDP-189) or other media with a target HRC hardness of 60. Such grinding media can be utilized with or without surface treatments such as nitriding and carburizing. This can conveniently be performed in a rotating drum. It will be understood that the product obtainable by the process of the invention when performed in a rotating drum, may also be obtainable using alternative grinding or milling techniques known to the skilled person.

In preferred embodiments of the invention, step (d) is performed in the presence of a catalyst, preferably a metal oxide catalyst, such as a transition metal oxide catalyst. Examples of suitable catalysts are selected from the group consisting of iron oxides, cobalt oxides, ruthenium oxides, titanium oxides, nickel oxides, aluminium oxides and combinations thereof.

Hence, as will be understood from the above, in highly preferred embodiments of the invention, step (d) comprises grinding, milling, mixing, stirring (such as low-speed stirring or high-speed stirring), shearing (such as high-torque shearing), shaking, blending, pulverizing, powderizing, crushing, crumbling, a fluidized bed or ultrasonication, preferably grinding, milling, mixing, stirring (such as low-speed stirring or high-speed stirring), shearing (such as high-torque shearing), or ultrasonication, in the presence of grinding or milling media and a metal oxide catalyst.

The present inventors have found that it is advantageous with a view to the efficiency of the mechanochemical carbonation (e.g. reaction time, CO₂ absorption and particle size reduction) to employ media as described herein before coated with said metal oxide catalyst and/or to employ a mechanical agitation unit (or parts thereof) which are coated with said metal oxide catalyst. As explained herein elsewhere, the mechanical agitation operation may be simply rotating the mechanical agitation unit containing the feedstock or the slag precursor for mechanochemical carbonation, the grinding or milling media, the metal oxide catalyst and the gas. This can conveniently be performed in a rotating drum.

As will be clear from the present description, step (d) is a substantially dry process. While some moisture may be present, step (d) is not performed on an aqueous solution or slurry. The present inventors have found that this greatly improves energy efficiency (as no water has to be removed afterwards) and imparts unique properties on the resulting mechanochemically carbonated slags, yielding materials which are substantially different from e.g. aqueous carbonation materials. This is also reflected in their distinct properties, e.g. when used as a filler in concrete. In embodiments of the invention, the solid feedstock preferably has a moisture content of less than 10 wt.% (by total weight of the solid feedstock), preferably less than 5 wt.%, more preferably less than 2 wt.%.

In particular, the present inventors have found that it is important that step (d) is carried out such that certain extents of carbonation, size reduction and/or surface area increase are effect during step (d), i.e. during the combined carbonation and mechanical agitation. This results in markedly different materials from materials which were e.g. milled and subsequently carbonated.

Thus, in highly preferred embodiments, the method of the invention is provided wherein carbonation, size reduction and/or surface area increase are effected during step (d) such that the method has one, two, three, or four, preferably all four, of the following characteristics
- the ratio of the CO₂ content of the mechanochemically carbonated slag obtained in step (d) to the CO₂ content of the slag precursor of step (a) is at least 1.5:1, preferably at least 2:1, more preferably at least 2.2:1, wherein the CO₂ content is determined as the mass loss above 450°C measured by TGA employing a temperature trajectory wherein the temperature was increased from room temperature to 800°C at a rate of 10 °C/min;
- the ratio of the D50 of the mechanochemically carbonated slag obtained in step (d) to the D50 of the slag precursor of step (a) is less than 0.9:1, preferably less than 0.75:1, more preferably less than 0.6:1;
- the ratio of the specific surface area of the mechanochemically carbonated slag obtained in step (d) to the specific surface area of the slag precursor of step (a) is at least 1.2:1, preferably at least 1.4:1, more preferably at least 1.6:1;
- the absolute difference between the amorphous content (expressed as % based on total weight) of the mechanochemically carbonated slag is and the amorphous content (expressed as % based on total weight) of the slag precursor is at least 20 percentage points, preferably at least 30 percentage points, more preferably at least 35 percentage points. The amorphous content is determined by XRD.

The skilled person will understand that, as the material of step (a) is fed to step (d), this means that the carbonation, size reduction and/or surface area specified above is effected during step (d).

Without wishing to be bound by any theory, the present inventors believe that the BET surface area increase effected by the dry mechanochemical carbonation method is associated with the beneficial properties observed (such as the excellent strength activity index, and reduced water demand). Hence, in highly preferred embodiments of the invention, the method of the invention is provided wherein carbonation and BET surface area increase are effected during step (d) such that the ratio of the BET surface area of the mechanochemically carbonated slag to the BET surface area of the slag precursor is at least 2:1, preferably at least 3:1, more preferably at least 3.5:1.

In particularly preferred embodiments of the method of the invention, the BJH desorption cumulative surface area of pores of the mechanochemically carbonated slag obtained in step (d) is at least 110%, preferably at least 120%, more preferably at least 150%, of the BJH desorption cumulative surface area of pores of the slag precursor and the desorption average pore width (4V/A by BET) of the mechanochemically carbonated slag obtained in step (d) is no more than 90%, preferably no more than 85%, more preferably no more than 80%, of the desorption average pore width (4V/A by BET) of the slag precursor.

### Properties of the slag precursor used in the mechanochemical carbonation method of the present invention

In preferred embodiments of the method described herein, the slag precursor is a particulate solid material, such as a powder or a granulated material. In preferred embodiments of the present invention, the slag precursor is a BF slag, an ACBF slag, a GBF slag, a BOF slag, an LS slag or an EAF slag. The slag precursor is preferably a BF slag, an ACBF slag, a GBF slag, a BOF slag, an LS slag or an EAF slag from ferrous metal production, non-ferrous metal production, or phosphorus production. The slag precursor is more preferably a BF slag, an ACBF slag, a GBF slag, a BOF slag, or an EAF slag from iron or steel production. The slag precursor is most preferably a granulated blast furnace slag or a basic oxygen furnace slag which has optionally been ground, from iron or steel production.

In preferred embodiments of the method described herein, the slag precursor is a particulate solid material which has a specific surface area of less than 0.6 m²/g, preferably less than 0.5 m²/g, more preferably less than 0.4 m²/g.

The slag precursor preferably has an amorphous content as determined by XRD of less than 45 wt.%, preferably less than wt.40%. The Larnite content as determined by XRD of the slag precursor is preferably more than 20 wt.%, such as more than 25 wt.%.

In embodiments, the slag precursor comprises a mixture of silicon dioxide and metal oxides other than silicon dioxide. The slag precursor typically contains other compounds such as metal sulfides and elemental metals.

In highly preferred embodiments of the invention, the slag precursor has one, two, or three, preferably three, of the following characteristics:
- a D10 within the range of 0.1-50 µm, preferably 0.1-20 µm, most preferably 0.1-10 µm;
- a D50 within the range of 5-200 µm, preferably 10-200 µm, most preferably 10-150 µm;
- a D90 within the range of 10-1000 µm, preferably 20-750 µm, most preferably 40-500 µm.

Preferably, the slag precursor has not been subjected to a compacting process. Accordingly, in some embodiments the slag precursor has a porosity of more than 40 vol%, preferably more than 50 vol%.

In embodiments of the invention, the slag precursor comprises:
- 10-40 wt. % SiO₂ (by total weight of the slag precursor);
- less than 90 wt.% (by total weight of the slag precursor) of metal oxides other than SiO₂, preferably less than 80 wt.% (by total weight of the slag precursor), more preferably less than 70 wt.% (by total weight of the slag precursor), even more preferably less than 60 wt.% (by total weight of the slag precursor).

In further embodiments of the invention, the slag precursor has one, two, three or all four, preferably all four, of the following characteristics:
- a total content of calcium oxides and hydroxides within the range of 30-60 wt. % (by total weight of the slag precursor);
- a total content of iron oxides and hydroxides within the range of 1-30 wt.% (by total weight of the slag precursor);
- a total content of magnesium oxides and hydroxides within the range of 1-10 wt.% (by total weight of the slag precursor);
- a total content of aluminum oxides and hydroxides within the range of 10-30 wt. % (by total weight of the slag precursor).

In preferred embodiments, the slag precursor comprises calcium oxides and hydroxides, magnesium oxides and hydroxides, SiO₂, and aluminium oxides and hydroxides in contents such that the sum of the total content of calcium oxides and hydroxides, magnesium oxides and hydroxides, and SiO₂ represents at least two thirds by weight (66.7% by weight) of the weight of the slag precursor and the ratio by weight of the sum of the total contents of calcium oxides and hydroxides and magnesium oxides and hydroxides to the content of silicon dioxide (e.g., of calcium oxide and magnesium oxide ratio to silicon dioxide is denoted as (CaO+MgO)/SiO₂) is greater than 1.0.

In preferred embodiments, the chemical composition of the slag precursor is such that the sum of the total contents by weight of calcium oxides and hydroxides, magnesium oxides and hydroxides, SiO₂, and aluminium oxides and hydroxides is greater than or equal to 80% by weight, more preferably greater than or equal to 90% by weight and better still greater than or equal to 95% by weight, with respect to the weight of the slag precursor.

In some embodiments, the slag precursor comprises less than 39% by weight of SiO₂ , less than 15% by weight of aluminum oxides and hydroxides, more than 37% by weight of calcium oxides and hydroxides and less than 13% by weight of magnesium oxides and hydroxides, with respect to the weight of the slag precursor.

In some embodiments, the chemical composition of the slag precursor comprises from 33-37% by weight of SiO₂, from 9-14% by weight of aluminum oxides and hydroxides, from 38-42% by weight of calcium oxides and hydroxides and from 1-12% by weight of magnesium oxides and hydroxides, with respect to the weight of the slag precursor.

Without wishing to be bound by any theory, it is believed that the presence of at least some alkaline earth metal oxides or hydroxides facilitates carbonation. Hence, according to embodiments or preferred embodiments of the invention, the slag precursor, as described herein, has a total of alkaline earth metal oxides and hydroxides of at least 0.01 wt.%, preferably at least 0.05 wt.%.

### Properties of the mechanochemically carbonated slag obtained in step (d)

In the method for producing a carbonated slag described herein, the carbonated slag obtained in step (d) has a specific surface area within the range of 0.1-50 m²/g, preferably 0.5-50 m²/g. The mechanochemically carbonated slag obtained in step (d) highly preferably has an amorphous content as determined by XRD of at least 50 wt.%, preferably at least 60 wt.%, more preferably at least 65 wt.%. As is shown in the appended examples, the present inventors have found that the mechanochemical carbonation methods herein enable obtaining such a high amorphous content slag. This is particularly preferred when the slag is obtained from a slag precursor which is a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag, said precursor having an amorphous content as determined by XRD of less than 45 wt.%, preferably less than 40 wt.%. It is furthermore preferred that the Larnite content as determined by XRD of the mechanochemically carbonated slag obtained in step (d) is less than 20 wt.%, preferably less than 14 wt.%, more preferably less than 10 wt.%.

In preferred embodiments of the invention, the carbonated slag obtained in step (d) meets the strength requirements set out in ASTM C618-12a (2012) and CSA A3001-18 (2018).

In embodiments of the invention, the mechanochemically carbonated slag obtained in step (d) has a specific surface area of at least 0.1 m²/g, preferably at least 0.5 m²/g.

In preferred embodiments of the invention, the carbonated slag obtained in step (d) has a specific surface area of less than 30 m²/g, more preferably less than 10 m²/g. For example, the specific surface area of less than 50 m²/g, less than 48 m²/g, less than 46 m²/g, less than 44 m²/g, less than 42 m²/g, less than 40 m²/g, less than 38 m²/g, less than 36 m²/g, less than 34 m²/g, less than 32 m²/g, less than 30 m²/g, less than 28 m²/g, less than 26 m²/g, less than 24 m²/g, less than 22 m²/g, less than 20 m²/g, less than 18 m²/g, less than 16 m²/g, less than 14 m²/g, less than 12 m²/g, less than 10 m²/g, less than 8 m²/g, less than 6 m²/g, etc.

In highly preferred embodiments, the carbonated slag obtained in step (d) has a specific surface area of less than 5 m²/g, preferably less than 3 m²/g, more preferably less than 2 m²/g. For example, the mechanochemically carbonated slag may have a specific surface area of less than 5.0 m²/g, less than 4.5 m²/g, less than 4.0 m²/g, less than 3.5 m²/g, less than 3.0 m²/g, less than 2.5 m²/g, less than 2.0 m²/g, less than 1.5 m²/g, etc.

The carbonated slag obtained in step (d) preferably has a CO₂ content of at least 1 wt.%, more preferably at least 1.5 wt.%, most preferably at least 2.2 wt.%, wherein the CO₂ content is determined as the mass loss above 450°C measured by TGA employing a temperature trajectory wherein the temperature was increased from room temperature to 800°C at a rate of 10 °C/min.

**The** inventors have observed that a mechanochemically carbonated slag having specific surface area within specific ranges provided surprising results of the carbonation when compared to untreated precursors. Hence, in accordance with highly preferred embodiments of the invention, the mechanochemically carbonated slag obtained in step (d) has specific surface area of 0.5-50 m²/g, such as a specific surface area in the region 0.1-50 m²/g, preferably 0.1-30 m²/g, more preferably 0.1-10 m²/g; a specific surface area in the region 0.1-5.0 m²/g, preferably 0.1-3.0 m²/g, more preferably 0.1-2.0 m²/g; a specific surface area in the region 0.5-50 m²/g, preferably 0.5-30 m²/g, more preferably 0.5-10 m²/g; a specific surface area in the region 0.5-5.0 m²/g, preferably 0.5-3.0 m²/g, more preferably 0.5-2.0 m²/g, etc.

In embodiments of the invention, the carbonated slag obtained in step (d) has one, two, or three, preferably three, of the following characteristics:
- a D10 within the range of 0.005-10 µm, preferably 0.01-5 µm, most preferably 0.1-5 µm;
- a D50 within the range of 0.5-35 µm, most preferably 1-15 µm;
- a D90 within the range of 0.5-100 µm, preferably 1-60 µm, most preferably 1-50 µm.

In embodiments of the invention, the mechanochemically carbonated slag obtained in step (d) has a strength activity index (SAI) at day 7 which is at least 75%, preferably at least 80%. The inventors have observed that the mechanochemical process of the present invention allows obtaining carbonated slag having excellent day 7 SAI. Hence, in highly preferred embodiments the mechanochemically carbonated slag has a SAI at day 7 which is at least 85%, preferably at least 90%, more preferably at least 95%.

In embodiments of the invention, the mechanochemically carbonated slag obtained in step (d) has a strength activity index (SAI) at day 28 which is at least 85%, preferably at least 90%. Hence, in highly preferred embodiments the mechanochemically carbonated slag has a SAI at day 28 which is at least 100%.

In embodiments of the invention, the mechanochemically carbonated slag obtained in step (d) has a water demand which is less than 97%, preferably less than 96%, more preferably less than 95%. The inventors have observed that the mechanochemically carbonated slag having a water demand which is less than 94%, preferably less than 93% provided even better results.

### The mechanochemically carbonated slag obtainable by the method described herein

The present inventors have found that the mechanochemical carbonation described herein imparts unique properties on the resulting mechanochemically carbonated slags, yielding materials which are substantially different from e.g. aqueous carbonation materials. This is also reflected in their distinct properties, e.g. when used as a filler in concrete. In particular, the present inventors have found that it is important that step (d) is carried out such that certain extents of carbonation, size reduction and/or surface area increase are effect during step (d), i.e. during the combined carbonation and mechanical agitation. This results in markedly different materials from materials which were e.g. carbonated in an aqueous environment, or even materials which were milled and subsequently carbonated. Hence, in another aspect the invention provides the mechanochemically carbonated slag obtainable by the method for producing mechanochemically carbonated slag described herein.

**As** will be understood by the skilled person in light of the present disclosure, the mechanochemically carbonated slag of the present invention constitutes an excellent filler for many applications, combining distinct mechanical properties with a cost-efficient CO₂ sequestration approach.

### Composition comprising a mechanochemically carbonated slag, and method for the preparation thereof

In another aspect the invention provides a composition comprising a mechanochemically carbonated slag as described herein and a further material selected from the group consisting of asphalt, cement, geopolymers, and combinations thereof, preferably cement, more preferably Portland cement.

In embodiments, the further material is a polymer selected from thermoplastic polymers and thermosetting polymers. In preferred embodiments, the further component is a polymer selected from the group consisting of epoxide resin, phenol-formaldehyde resin, polyalkylene terephthalate (preferably polyethylene terephthalate), polalkylene adipate terephthalate (preferably polybutylene adipate terephthalate), polyalkylene isosorbide terephthalate (preferably polyethylene isosorbide terephthalate), polyalkylene aromatic polyamide (preferably polyethylene aromatic polyamide), polyacrylonitrile, polyacetal, polyimide, aromatic polyester, polyisoprene (preferably cis-1,4-polyisoprene), polyethylene, polypropylene, polyurethane, polyisocyanurate, polyamide, polyether, polyester, polyhydroxyalkanoate, polylactic acid, poly lactic-co-glycolic acid, polyvinylidene fluoride, polyvinyl acetate, polyvinyl chloride, polystyrene, polytetrafluoroethylene, acrylonitrile-butadienestyrene, nitrile rubber, styrenebutadiene, ethylene-vinyl acetate, copolymers thereof and combinations thereof, more preferably a polyolefin, such as polypropylene, polyethylene, copolymers thereof and combinations thereof. The term "polymer" as used herein includes copolymers, such as block copolymers.

In highly preferred embodiments the further material is selected from selected from the group consisting of asphalt, cement, geopolymers, and combinations thereof.

In accordance with the invention, the cement may be a hydraulic or non-hydraulic cement. In preferred embodiments, the cement is a hydraulic cement, such as Portland cement. In highly preferred embodiments of the invention, the cement is one of the cements defined in EN197-1 (2011), preferably Portland cement as defined in EN197-1 (2011).

In embodiments of the invention, the composition comprises more than 0.1 wt.% (by total weight of the composition), preferably more than 1 wt.%, more preferably more than 5 wt.% of the mechanochemically carbonated slag and/or more than 0.1 wt.% (by total weight of the composition), preferably more than 1 wt.%, more preferably more than 20 wt.% of the further material.

In embodiments of the invention, the composition comprises less than 60 wt.% (by total weight of the composition), preferably less than 50 wt.%, more preferably less than 45 wt.% of the mechanochemically carbonated slag and/or less than 95 wt.% (by total weight of the composition), preferably less than 90 wt.%, more preferably less than 80 wt.% of the further material.

In embodiments of the invention, the composition is provided wherein the weightweight ratio of the mechanochemically carbonated slag to the further material is within the range of 1:9 to 2:1, preferably within the range of 1:8 to 1:1, more preferably within the range of 1:6 to 5:6.

In embodiments of the invention, the composition comprises 5-70 wt.% (by total weight of the composition), preferably 10-60 wt.%, more preferably 20-50 wt.% of the mechanochemically carbonated slag and 30-95 wt.% (by total weight of the composition), preferably 40-90 wt.%, preferably 50-80 wt.% of the further material.

In embodiments of the invention, the composition comprises less than 5 wt.% (by total weight of the composition water, preferably less than 1 wt.%, more preferably less than 0.1 wt.%. The amount of water can suitably be determined as the mass loss up to 120°C measured by TGA employing a temperature trajectory wherein the temperature was increased from room temperature to 800°C at a rate of 10°C/min.

In embodiments of the invention, the composition consists of the mechanochemically carbonated slag and the further material.

In another aspect the invention provides a method for preparing a composition as described herein, said method comprising the following steps:
(i) providing a mechanochemically carbonated slag as described herein, preferably a mechanochemically carbonated slag as described herein;
(ii) providing a further material selected from the group consisting of selected from the group consisting of asphalt, cement, geopolymers, and combinations thereof;
(iii) combining the mechanochemically carbonated slag solid of step (i) with the material of step (ii).

### A method for preparing concrete or mortar

In another aspect the invention provides a method for preparing concrete or mortar, said method comprising the following steps:
(i) providing a mechanochemically carbonated slag as described herein and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate;
(iii) contacting, preferably mixing the mechanochemically carbonated slag and the further material of step (i) with the construction aggregate of step (ii) and optionally water.

In another aspect the invention provides a concrete or mortar obtainable by the method for preparing concrete as described herein.

In preferred embodiments of the invention, step (iii) further comprises contacting, preferably mixing the mechanochemically carbonated slag and the further material of step (i) with the construction aggregate of step (ii) and water. In accordance with the invention, the mechanochemically carbonated slag and the further material of step (i), the construction aggregate of step (ii) and the water may be contacted, preferably mixed at substantially the same time, or in a step-wise manner wherein the composition of step (i) is first contacted, preferably mixed with water, before being contacted, preferably mixed with the construction aggregate of step (ii).

In another aspect the invention provides the use of a mechanochemically carbonated slag as described herein:
- as a filler, preferably as a filler in a material selected from the group consisting of asphalt, geopolymer, cement, mortar, polymers and combinations thereof;
- as a partial replacement for asphalt, geopolymer or cement in concrete or mortar;
- to increase the compressive strength of concrete or mortar;
- to improve the durability of concrete or mortar;
- to improve the durability of concrete or mortar by reducing chloride permeability and/or porosity;
- to improve the strength activity index of concrete or mortar; and/or
- to reduce the water demand of concrete or mortar,
   preferably,
- to concomitantly improve the strength activity index of concrete and reduce the water demand of concrete; or
- to concomitantly improve the strength activity index of mortar and reduce the water demand of mortar.

### Examples

Particle Size Distribution and specific surface area measurements were carried out on a Brookhaven laser particle sizer, Model Microbrook 2000LD using utilizing the Fraunhofer theory of light scattering and reporting the data using a volume equivalent sphere model.

Compressive strength, strength activity index and water demand was measured in accordance with ASTM C311/C311M-22. As will be evident to the skilled person, in performing these tests, the clay precursor or the carbonated clay of the present invention was used instead of the "fly ash or natural pozzolan" specified by the standard.

The CO₂ content was determined as the mass loss above 450 °C as measured by TGA employing a temperature trajectory wherein the temperature was increased from room temperature to 800 °C at a rate of 10°C/min. A Setaram TAG 16 TGA/DSC dual chamber balance employing a 0.1-2 mg sample under an inert nitrogen atmosphere was used.

### Example 1

### Sample A

Mechanochemically carbonated slag was produced by inserting 10.5 kg of slag precursor (ground granulated blast furnace slag) into a pressure cell with 150 kg of a first milling media (ceramic bearings of 25.4 mm size) and 150 kg of a second milling media (ceramic bearings of 10 mm size). The cell is pressurized with flue gas (CO₂: 8-10 vol%; H₂O: 18-20 vol %; O₂: 2-3 vol %; N₂: 67-72 vol %) to an initial pressure of 448 kPa, and rotated on rollers at 38 RPM for 3 days to obtain mechanochemically carbonated slag. The reaction was initiated at room temperature and no heating or cooling was applied. The ceramic bearings have an Al₂O₃ content of 92 wt.% such that they also served as catalyst. The properties of the slag precursor and the obtained mechanochemically carbonated slag are shown in the below table.

### Sample B

Mechanochemically carbonated slag was produced by inserting 0.9 kg of slag precursor (basic oxygen furnace slag) of Sample B into a pressure cell with 17.5 kg of milling media (ceramic bearings of 10 mm size). The cell is pressurized with flue gas (CO₂: 8-10 vol%; H₂O: 18-20 vol %; O₂: 2-3 vol %; N₂: 67-72 vol %) to an initial pressure of 414 kPa, and rotated on rollers at 40 RPM for 2 days to obtain mechanochemically carbonated slag. The reaction was initiated at room temperature and no heating or cooling was applied. The ceramic bearings have an Al₂O₃ content of 92 wt.% such that they also served as catalyst. The properties of the slag precursor and the obtained mechanochemically carbonated slag are shown in the below table.

| **Sample Number** | **Slag** | **Particle Size Distribution** | | | **DLS surface area (m²/g)** | **CO₂ content (wt.%)** | **% Water Demand** | **SAI 7-day, %** | **SAI 28-day, %** |
|---|---|---|---|---|---|---|---|---|---|
| | | **D10 (µm)** | **D50 (µm)** | **D90 (µm)** | | | | | |
| A | Precursor | 1.440 | 71.43 | 218.5 | 0.419 | 0.91 | - | - | - |
| A | Carbonated material | 0.8 | 2.0 | 9.2 | 1.347 | 2.60 | 94.2 | 81.2 | 89.5 |
| B | Precursor | 2.5 | 18.4 | 60.6 | 0.340 | - | 99.0 | 85.2 | 98.9 |
| B | Carbonated material | 1.67 | 9.7 | 32.6 | 0.628 | 1.33 | 92.8 | 98.2 | 103.9 |

**As** can be observed from the Strength Activity Index (SAI) measurements and the water demand measurements, the mechanochemically carbonated slag of the present invention provides an unexpectedly reduced water demand and increased strength compared to the uncarbonated counterpart and even compared to the Portland cement control.

### Example 2

Sample A as described in example 1 was examined by X-ray diffraction analysis and the five largest fractions identified are shown in the below table.

| **Sample Number** | **Slag** | **Amorphous (wt.%)** | **Larnite (wt.%)** | **Portlandite (wt.%)** | **Wüstite (wt.%)** | **Srebrodolskite (wt.%)** |
|---|---|---|---|---|---|---|
| A | Precursor | 33.4 | 27.2 | 6.1 | 5.5 | 5.2 |

| **Sample Number** | **Slag** | **Amorphous (wt.%)** | **Larnite (wt.%)** | **Wüstite (wt.%)** | **Brownmillerite (wt.%)** | **Srebrodolskite (wt.%)** |
|---|---|---|---|---|---|---|
| A | Carbonated material | 730 | 7.6 | 4.1 | 2.5 | 2.4 |

**Thus,** it was found that the mechanochemical carbonation method of the present invention effects a large increase in amorphous content. Without wishing to be bound by any theory, the present inventors believe this is at least in part responsible for the beneficial decrease in water demand observed.

## Claims

1. A method for producing a mechanochemically carbonated slag, said method comprising the following steps:
a) providing a feedstock comprising or consisting of a slag precursor;
b) providing a gas comprising at least 0.5 vol% CO₂;
c) introducing said feedstock and said gas into a mechanical agitation unit; and
d) subjecting the material of said feedstock to a mechanical agitation operation in the presence of said gas in said mechanical agitation unit,
wherein step (d) is not performed on an aqueous solution or slurry.

2. The method of claim 1 wherein the slag precursor is a particulate material which has a specific surface area of less than 0.6 m²/g, preferably less than 0.5 m²/g, more preferably less than 0.4 m²/g.

3. The method of any of claims 1 or 2 wherein the gas provided in step (b) is a combustion flue gas, preferably combustion flue gas from fossil fuel combustion, wood pellet combustion, biomass combustion or municipal waste combustion.

4. The method of any of claims 1-3 wherein the step (d) is performed at a temperature of less than 100°C, preferably less than 80°C.

5. The method of any of claims 1-4 wherein carbonation, size reduction and/or surface area increase are effected during step (d) such that the method has one, two, three or all four, preferably all four, of the following characteristics
• the ratio of the CO₂ content of the mechanochemically carbonated slag obtained in step (d) to the CO₂ content of the slag precursor of step (a) is at least 1.5:1, preferably at least 2:1, more preferably at least 2.2:1, wherein the CO₂ content is determined as the mass loss above 450°C measured by TGA employing a temperature trajectory wherein the temperature was increased from room temperature to 800°C at a rate of 10 °C/min;
• the ratio of the D50 of the mechanochemically carbonated slag obtained in step (d) to the D50 of the slag precursor of step (a) is less than 0.9:1, preferably less than 0.75:1, more preferably less than 0.6:1;
• the ratio of the specific surface area of the mechanochemically carbonated slag to the specific of the slag precursor is at least 1.2:1, preferably at least 1.4:1, more preferably at least 1.6:1;
• the absolute difference between the amorphous content (expressed as % based on total weight) of the mechanochemically carbonated slag is and the amorphous content (expressed as % based on total weight) of the slag precursor is at least 20 percentage points, preferably at least 30 percentage points, more preferably at least 35 percentage points.

6. The method of any of claims 1-5 wherein the slag precursor is a blast furnace (BF) slag, an air-cooled blast furnace (ACBF) slag, a granulating blast furnace (GBF) slag, a basic oxygen furnace (BOF) slag, a ladle furnace basic slag (LS) or an electric arc furnace (EAF) slag, preferably a granulating blast furnace (GBF) or basic oxygen furnace (BOF) slag.

7. A Mechanochemically carbonated slag obtainable by the method of any one of claims 1-6 which has a specific surface area within the range of 0.1-50 m²/g, preferably 0.5-50 m²/g and which has a D50 within the range of 0.1-50 µm, preferably 0.5-35 µm, most preferably 1-15 µm.

8. The mechanochemically carbonated slag of claim 7 having an amorphous content as determined by XRD of at least 50 wt.%.

9. The mechanochemically carbonated slag of claim 7 or 8 having a CO₂ content of at least 1 wt.%, more preferably at least 1.5 wt.%, most preferably at least 2.2 wt.%, wherein the CO₂ content is determined as the mass loss above 450°C measured by TGA employing a temperature trajectory wherein the temperature was increased from room temperature to 800°C at a rate of 10 °C/min.

10. The mechanochemically carbonated slag of any one of claims 7-9 having:
• 10-40 wt. % (by total weight of the mechanochemically carbonated slag) SiO₂; and
• less than 90 wt.% (by total weight of the mechanochemically carbonated slag) of metal oxides other than SiO₂, preferably less than 80 wt.% (by total weight of the mechanochemically carbonated slag), more preferably less than 70 wt.% (by total weight of the mechanochemically carbonated slag), even more preferably less than 60 wt.% (by total weight of the mechanochemically carbonated slag).

11. A composition comprising a mechanochemically carbonated slag of any one of claims 7-10 and a further material selected from the group consisting of asphalt, cement, geopolymers, polymers, and combinations thereof, preferably cement, more preferably Portland cement.

12. A method for preparing concrete or mortar, said method comprising the following steps:
(i) providing a mechanochemically carbonated slag of any one of claims 7-10 and a further material which is selected from the group consisting of asphalt, cement, geopolymers, and combinations thereof, optionally in the form of the composition as described herein wherein the further material is selected from the group consisting of asphalt, cement, geopolymers, and combinations thereof;
(ii) providing a construction aggregate;
(iii) contacting, preferably mixing the mechanochemically carbonated slag and the further material of step (i) with the construction aggregate of step (ii) and optionally water.

13. Use of the mechanochemically carbonated slag of any one of claims 7-10 :
• as a filler, preferably as a filler in a material selected from the group consisting of asphalt, cement, mortar, geopolymer, polymers and combinations thereof;
• as a partial replacement for asphalt, geopolymer or cement in concrete or mortar;
• to increase the compressive strength of concrete or mortar;
• to improve the durability of concrete or mortar;
• to improve the durability of concrete or mortar by reducing chloride permeability and/or porosity;
• to improve the strength activity index of concrete or mortar; and/or
• to reduce the water demand of concrete or mortar,
preferably,
• to concomitantly improve the strength activity index of concrete and reduce the water demand of concrete; or
• to concomitantly improve the strength activity index of mortar and reduce the water demand of mortar.

## Patentansprüche

1. Verfahren zur Herstellung einer mechanochemisch karbonisierten Schlacke, wobei das Verfahren die folgenden Schritte umfasst:
a) Bereitstellen eines Ausgangsmaterials, das einen Schlackenvorläufer umfasst oder daraus besteht;
b) Bereitstellen eines Gases, das mindestens 0,5 Vol.-% CO₂ umfasst;
c) Einführen des Ausgangsmaterials und des Gases in eine Einheit für mechanische agitation; und
d) Aussetzen des Materials des Ausgangsmaterials einem mechanischen agitation Betrieb in Gegenwart des Gases in der Einheit für mechanische agitation,
wobei Schritt (d) nicht an einer wässrigen Lösung oder Slurry durchgeführt wird.

2. Verfahren nach Anspruch 1, wobei der Schlackenvorläufer ein partikuläres Material ist, das eine spezifische Oberfläche von weniger als 0,6 m²/g, vorzugsweise weniger als 0,5 m²/g, besonders bevorzugt weniger als 0,4 m²/g aufweist.

3. Verfahren nach einem der Ansprüche 1 oder 2, wobei das in Schritt (b) bereitgestellte Gas ein Verbrennungsabgas ist, vorzugsweise Verbrennungsabgas aus der Verbrennung von fossilen Brennstoffen, aus der Verbrennung von Holzpellets, aus der Verbrennung von Biomasse oder aus der Verbrennung von Siedlungsabfall.

4. Verfahren nach einem der Ansprüche 1-3, wobei der Schritt (d) bei einer Temperatur von weniger als 100°C, vorzugsweise weniger als 80°C, durchgeführt wird.

5. Verfahren nach einem der Ansprüche 1-4, bei dem die Karbonisierung, die Größenreduktion und/oder die Vergrößerung der Oberfläche während des Schritts (d) bewirkt werden, so dass das Verfahren eines, zwei, drei oder alle vier, vorzugsweise alle vier, der folgenden Merkmale aufweist:
• das Verhältnis des CO₂-Gehalts der in Schritt (d) erhaltenen mechanochemisch karbonisierten Schlacke zu dem CO₂-Gehalt des Schlackenvorläufers aus Schritt (a) beträgt mindestens 1,5:1, vorzugsweise mindestens 2:1, noch bevorzugter mindestens 2,2:1, wobei der CO₂-Gehalt als der Massenverlust oberhalb von 450°C bestimmt wird, der durch TGA unter Verwendung einer Temperaturkurve gemessen wird, bei der die Temperatur von Raumtemperatur auf 800°C mit einer Rate von 10 °C/min erhöht wurde;
• das Verhältnis des D50 der in Schritt (d) erhaltenen mechanochemisch karbonisierten Schlacke zum D50 des Schlackenvorläufers von Schritt (a) beträgt weniger als 0,9:1, vorzugsweise weniger als 0,75:1, noch bevorzugter weniger als 0,6:1;
• das Verhältnis der spezifischen Oberfläche der mechanochemisch karbonisierten Schlacke zu der spezifischen des Schlackenvorläufers beträgt mindestens 1,2:1, vorzugsweise mindestens 1,4:1, noch bevorzugter mindestens 1,6:1;
• die absolute Differenz zwischen dem amorphen Gehalt (ausgedrückt in %, bezogen auf das Gesamtgewicht) der mechanochemisch karbonisierten Schlacke und dem amorphen Gehalt (ausgedrückt in %, bezogen auf das Gesamtgewicht) des Schlackenvorläufers beträgt mindestens 20 Prozentpunkte, vorzugsweise mindestens 30 Prozentpunkte, noch bevorzugter mindestens 35 Prozentpunkte.

6. Verfahren nach einem der Ansprüche 1-5, wobei der Schlackenvorläufer eine Hochofenschlacke (BF), eine luftgekühlte Hochofenschlacke (ACBF), eine Granulierhochofenschlacke (GBF), eine Sauerstoffblaskonverterschlacke (BOF), eine Pfannenofenschlacke (LS) oder eine Elektrolichtbogenofenschlacke (EAF) ist, vorzugsweise eine Granulierhochofenschlacke (GBF) oder Sauerstoffblaskonverterschlacke (BOF).

7. Mechanochemisch karbonisierte Schlacke, die durch das Verfahren nach einem der Ansprüche 1-6 erhältlich ist und eine spezifische Oberfläche im Bereich von 0,1-50 m²/g, vorzugsweise 0,5 bis 50 m²/g, und einen D50-Wert im Bereich von 0,1 bis 50 µm, vorzugsweise 0,5 bis 35 µm, besonders bevorzugt 1-15 µm, aufweist.

8. Mechanochemisch karbonisierte Schlacke nach Anspruch 7 mit einem durch XRD bestimmten amorphen Gehalt von mindestens 50 Gew.-%.

9. Mechanochemisch karbonisierte Schlacke nach Anspruch 7 oder 8 mit einem CO₂-Gehalt von mindestens 1 Gew.-%, vorzugsweise mindestens 1,5 Gew.-%, am meisten bevorzugt mindestens 2,2 Gew.-%, wobei der CO₂-Gehalt als der Massenverlust oberhalb von 450 °C bestimmt wird, der durch TGA unter Verwendung einer Temperaturkurve gemessen wird, bei der die Temperatur von Raumtemperatur auf 800 °C mit einer Rate von 10 °C/min erhöht wird.

10. Mechanochemisch karbonisierte Schlacke nach einem der Ansprüche 7-9 mit:
• 10-40 Gew.-% (bezogen auf das Gesamtgewicht der mechanochemisch karbonisierten Schlacke) SiO₂; und
• weniger als 90 Gew.-% (bezogen auf das Gesamtgewicht der mechanochemisch karbonisierten Schlacke) an anderen Metalloxiden als SiO₂, vorzugsweise weniger als 80 Gew.-% (bezogen auf das Gesamtgewicht der mechanochemisch karbonisierten Schlacke), noch bevorzugter weniger als 70 Gew.-% (bezogen auf das Gesamtgewicht der mechanochemisch karbonisierten Schlacke), noch bevorzugter weniger als 60 Gew.-% (bezogen auf das Gesamtgewicht der mechanochemisch karbonisierten Schlacke).

11. Zusammensetzung, umfassend eine mechanochemisch karbonisierte Schlacke nach einem der Ansprüche 7-10 und ein weiteres Material, das aus der Gruppe ausgewählt ist, die aus Asphalt, Zement, Geopolymeren, Polymeren und Kombinationen davon besteht, vorzugsweise Zement, besonders bevorzugt Portlandzement.

12. Verfahren zur Herstellung von Beton oder Mörtel, wobei das Verfahren die folgenden Schritte umfasst:
(i) Bereitstellen einer mechanochemisch karbonisierten Schlacke nach einem der Ansprüche 7-10 und eines weiteren Materials, das aus der Gruppe ausgewählt ist, die aus Asphalt, Zement, Geopolymeren und Kombinationen davon besteht, optional in Form der hier beschriebenen Zusammensetzung, wobei das weitere Material aus der Gruppe ausgewählt ist, die aus Asphalt, Zement, Geopolymeren und Kombinationen davon besteht;
(ii) Bereitstellen eines Bauzuschlagstoffs;
(iii) Kontaktieren, vorzugsweise Mischen, der mechanochemisch karbonisierten Schlacke und des weiteren Materials aus Schritt (i) mit dem Bauzuschlagstoff aus Schritt (ii) und optional Wasser.

13. Anwendung der mechanochemisch karbonisierten Schlacke nach einem der Ansprüche 7-10:
• als Füllstoff, vorzugsweise als Füllstoff in einem Material, das aus der Gruppe bestehend aus Asphalt, Zement, Mörtel, Geopolymer, Polymeren und Kombinationen davon ausgewählt ist;
• als Teilersatz für Asphalt, Geopolymer oder Zement in Beton oder Mörtel;
• um die Druckfestigkeit von Beton oder Mörtel zu erhöhen;
• zur Verbesserung der Dauerhaftigkeit von Beton oder Mörtel;
• zur Verbesserung der Dauerhaftigkeit von Beton oder Mörtel durch Verringerung der Chloriddurchlässigkeit und/oder Porosität;
• zur Verbesserung des Festigkeitsaktivitätsindex von Beton oder Mörtel; und/oder
• zur Reduktion des Wasserbedarfs von Beton oder Mörtel,
vorzugsweise,
• um gleichzeitig den Festigkeitsaktivitätsindex von Beton zu verbessern und den Wasserbedarf von Beton zu verringern; oder
• um gleichzeitig den Festigkeitsaktivitätsindex von Mörtel zu verbessern und den Wasserbedarf von Mörtel zu verringern.

## Revendications

1. - Procédé de production d'un laitier carbonaté par voie mécano-chimique, ledit procédé comprenant les étapes suivantes :
a) se procurer une charge d'alimentation comprenant ou consistant en un précurseur de laitier ;
b) se procurer un gaz comprenant au moins 0,5 % en volume de CO₂ ;
c) introduire ladite charge d'alimentation et ledit gaz dans une unité d'agitation mécanique ; et
d) soumettre le matériau de ladite charge d'alimentation à une opération d'agitation mécanique en présence dudit gaz dans ladite unité d'agitation mécanique,
dans lequel l'étape (d) n'est pas effectuée sur une solution ou bouillie aqueuse.

2. - Procédé selon la revendication 1, dans lequel le précurseur de laitier est un matériau particulaire qui a une surface spécifique inférieure à 0,6 m²/g, de préférence inférieure à 0,5 m²/g, de façon davantage préférée inférieure à 0,4 m²/g.

3. - Procédé selon l'une quelconque des revendications 1 ou 2, dans lequel le gaz fourni à l'étape (b) est un gaz de combustion, de préférence un gaz de combustion provenant de la combustion de combustibles fossiles, de la combustion de granulés de bois, de la combustion de biomasse ou de la combustion de déchets municipaux.

4. - Procédé selon l'une quelconque des revendications 1 à 3, dans lequel l'étape (d) est effectuée à une température inférieure à 100°C, de préférence inférieure à 80°C.

5. - Procédé selon l'une quelconque des revendications 1 à 4, dans lequel la carbonatation, la réduction de taille et/ou l'augmentation de la surface spécifique sont effectuées pendant l'étape (d) de telle sorte que le procédé possède une, deux, trois ou les quatre, de préférence les quatre, des caractéristiques suivantes :
▪ le rapport de la teneur en CO₂ du laitier carbonaté par voie mécano-chimique obtenu à l'étape (d) à la teneur en CO₂ du précurseur de laitier de l'étape (a) est d'au moins 1,5:1, de préférence d'au moins 2:1, de façon davantage préférée d'au moins 2,2:1, la teneur en CO₂ étant déterminée comme la perte de masse au-dessus de 450°C mesurée par ATG employant une trajectoire de température dans laquelle la température a été élevée de la température ambiante à 800°C à une allure de 10°C/min ;
▪ le rapport du D50 du laitier carbonaté par voie mécano-chimique obtenu à l'étape (d) au D50 du précurseur de laitier de l'étape (a) est inférieur à 0,9:1, de préférence inférieur à 0,75:1, de façon davantage préférée inférieur à 0,6:1 ;
▪ le rapport de la surface spécifique du laitier carbonaté par voie mécano-chimique à la surface spécifique du précurseur de laitier est d'au moins 1,2:1, de préférence d'au moins 1,4:1, de façon davantage préférée d'au moins 1,6:1 ;
▪ la différence absolue entre la teneur amorphe (exprimée en % sur la base du poids total) du laitier carbonaté par voie mécano-chimique et la teneur amorphe (exprimée en % sur la base du poids total) du précurseur de laitier est d'au moins 20 points de pourcentage, de préférence d'au moins 30 points de pourcentage, de façon davantage préférée d'au moins 35 points de pourcentage.

6. - Procédé selon l'une quelconque des revendications 1 à 5, dans lequel le précurseur de laitier est un laitier de haut fourneau (BF), un laitier de haut fourneau refroidi à l'air (ACBF), un laitier de haut fourneau de granulation (GBF), un laitier de four à oxygène basique (BOF), un laitier basique de four-poche (LS) ou un laitier de four à arc électrique (EAF), de préférence un laitier de haut fourneau de granulation (GBF) ou de four à oxygène basique (BOF).

7. - Laitier carbonaté par voie mécano-chimique pouvant être obtenu par le procédé selon l'une quelconque des revendications 1 à 6 qui a une surface spécifique dans la plage de 0,1 à 50 m²/g, de préférence de 0,5 à 50 m²/g et qui a un D50 dans la plage de 0,1 à 50 µm, de préférence de 0,5 à 35 µm, de la façon que l'on préfère le plus de 1 à 15 µm.

8. - Laitier carbonaté par voie mécano-chimique selon la revendication 7 ayant une teneur amorphe telle que déterminée par XRD d'au moins 50 % en poids.

9. - Laitier carbonaté par voie mécano-chimique selon la revendication 7 ou la revendication 8 ayant une teneur en CO₂ d'au moins 1 % en poids, de façon davantage préférée d'au moins 1,5 % en poids, de la façon que l'on préfère le plus d'au moins 2,2 % en poids, la teneur en CO₂ étant déterminée comme la perte de masse au-dessus de 450 °C mesurée par ATG employant une trajectoire de température dans laquelle la température a été élevée de la température ambiante à 800 °C à une allure de 10 °C/min.

10. - Laitier carbonaté par voie mécano-chimique selon l'une quelconque des revendications 7 à 9 ayant :
▪ 10 à 40 % en poids (par poids total du laitier carbonaté par voie mécano-chimique) de SiO₂ ; et
▪ moins de 90 % en poids (par poids total du laitier carbonaté par voie mécano-chimique) d'oxydes métalliques autres que SiO₂, de préférence moins de 80 % en poids (par poids total du laitier carbonaté par voie mécano-chimique), de façon davantage préférée moins de 70 % en poids (par poids total du laitier carbonaté par voie mécano-chimique), de façon encore plus préférée moins de 60 % en poids (par poids total du laitier carbonaté par voie mécano-chimique).

11. - Composition comprenant un laitier carbonaté par voie mécano-chimique selon l'une quelconque des revendications 7 à 10 et un autre matériau choisi dans le groupe consistant en l'asphalte, le ciment, les géopolymères, les polymères et les combinaisons de ceux-ci, de préférence le ciment, de façon davantage préférée le ciment Portland.

12. - Procédé de préparation de béton ou mortier, ledit procédé comprenant les étapes suivantes :
(i) se procurer un laitier carbonaté par voie mécano-chimique selon l'une quelconque des revendications 7 à 10 et un autre matériau qui est choisi dans le groupe consistant en l'asphalte, le ciment, les géopolymères et les combinaisons de ceux-ci, facultativement sous la forme de la composition telle que décrite présentement, l'autre matériau étant choisi dans le groupe consistant en l'asphalte, le ciment, les géopolymères et les combinaisons de ceux-ci ;
(ii) se procurer un agrégat de construction ;
(iii) mettre en contact, de préférence mélanger, le laitier carbonaté par voie mécano-chimique et l'autre matériau de l'étape (i) avec l'agrégat de construction de l'étape (ii) et facultativement de l'eau.

13. - Utilisation du laitier carbonaté par voie mécano-chimique selon l'une quelconque des revendications 7 à 10 :
▪ comme charge, de préférence comme charge dans un matériau choisi dans le groupe consistant en l'asphalte, le ciment, le mortier, un géopolymère, les polymères et les combinaisons de ceux-ci ;
▪ en tant que remplacement partiel de l'asphalte, d'un géopolymère ou du ciment dans le béton ou mortier ;
▪ pour augmenter la résistance à la compression du béton ou mortier ;
▪ pour améliorer la durabilité du béton ou mortier ;
▪ pour améliorer la durabilité du béton ou mortier par réduction de la perméabilité aux chlorures et/ou de la porosité ;
▪ pour améliorer l'indice de force d'activité du béton ou mortier ; et/ou
▪ pour réduire la demande en eau du béton ou mortier,
de préférence,
▪ pour simultanément améliorer l'indice de force d'activité du béton et réduire la demande en eau du béton ; ou
▪ pour simultanément améliorer l'indice de force d'activité du mortier et réduire la demande en eau du mortier.
